# EUROPEAN PATENT SPECIFICATION

(11) **EP 1 318 069 B1**
(45) Date of publication and mention of the grant of the patent: **11.10.2006**
(21) Application number: 02026583.1
(22) Date of filing: 28.11.2002
(51) Int. Cl.: B62K 21/08

(54) **Steering damper system**
Lenkungsdämpfer
Amortisseur de direction

(30) Priority: 06.12.2001 JP 2001372689
(43) Date of publication of application: 11.06.2003
(73) Proprietor: HONDA GIKEN KOGYO KABUSHIKI KAISHA, Minato-ku, Tokyo (JP); KAYABA INDUSTRY CO., LTD., Minato-Ku, Tokyo (JP)
(72) Inventor: Hasegawa, Yosuke, 4-1, Chuo,1-chome, Wako-shi, Saitama (JP); Itabashi, Takeyasu, 4-1, Chuo,1-chome, Wako-shi, Saitama (JP); Hayashi, Kanji, 4-1, Chuo,1-chome, Wako-shi, Saitama (JP); Wakabayashi, Takeshi, 4-1, Chuo,1-chome, Wako-shi, Saitama (JP); Nanri, Takehiko, 4-1, Chuo,1-chome, Wako-shi, Saitama (JP); Bunya, Osamu, 4-1, Chuo,1-chome, Wako-shi, Saitama (JP); Yamagata, Hideki, World Trade Center Bldg., Tokyo (JP); Fushimi, Kazunori, World Trade Center Bldg., Tokyo (JP); Hanawa, Nobumichi, World Trade Center Bldg., Tokyo (JP); Yoshida, Noboru, World Trade Center Bldg., Tokyo (JP)
(74) Representative: Rössig, Rolf

(56) References cited:
- US-A- 4 773 514
- US-A- 4 811 807

## Description

### FIELD OF THE INVENTION

This invention relates to a steering damper system for enhancing the safety of the steering system of a motorcycle, for example, without sacrificing maneuverability upon entry of outside disturbances from a road surface.

### TECHNICAL BACKGROUND

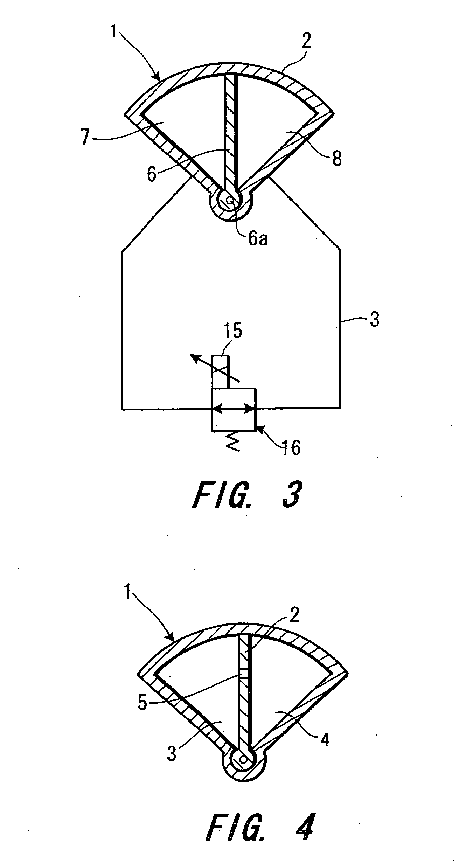

As is illustrated in Fig. 4, a motorcycle steering damper known in the prior art is provided with a partition portion 62 in housing 61 defining a pair of oil chambers 63, 64 within the housing 61 which are filled with oil. The housing 61 and partition member 62 are relatively rotatable. More specifically, the housing 61 is fixed to a handle bar side not shown in the drawing, and the partition member 62 is fixed to the vehicle body side. An orifice 65 is formed in the partition portion 62 and the two oil chambers 63, 64 are connected via this orifice 65.

When the aforementioned handle bar is turned, the partition member 62 rotates relatively to the housing 61, and hence at that time the volume of one of the oil chambers decreases such that the volume of the other oil chamber is enlarged. Accordingly, the oil in the oil chamber with the contracted volume flows through the orifice 65 into the oil chamber with the enlarged volume, and when the oil passes through the orifice 65, damping force is generated.

This damping force increases the faster the handle bar is turned. The reason for this is that the relative rotation speed between the housing 61 and the partition portion 62 increases the faster the handle bar is turned and hence the flow quantity per unit time through the orifice 65 increases. Thus when the handle bar shakes at high speed due to outside disturbances when the vehicle is in motion, the shaking in the handle bar may be suppressed by the damping force generated by the orifice 65.

In this type of conventional steering damper system, when the damping force is maintained at a high level in order to respond to the generation of outside disturbances by making the diameter of the aforementioned orifice small, operation of the handle bar becomes heavy. As a result, agile maneuverability under normal running conditions is impaired and the so-called steering feel deteriorates. Conversely, when the orifice diameter is increased such that the damping force is reduced, steering operation stability upon generation of outside disturbances is impaired.

In short, the problem with conventional steering damper systems, such as in closest prior art document US 4 811 807 which discloses all the features of the preamble of independent claim 1, is that if emphasis is laid upon the steering feel, then steering stability when outside disturbances occur is impaired, and if emphasis is laid upon operational safety when outside disturbances occur, then the steering feel is impaired.

An object of this invention is to provide a steering damper system which is capable of maintaining steering stability while also preserving a favorable steering feel.

### SUMMARY OF THE INVENTION

In order to achieve above the object this invention as disclosed by the features of independent claim 1 provides a steering damper system for applying steering resistance by means of oil pressure comprising, a variable damping valve, interposed on a channel through which hydraulic fluid flows in accordance with a steering operation, which generates flow resistance and variably alters this flow resistance in accordance with a control signal; means for detecting vehicle speed; means for detecting outside disturbances which enter a handle bar side; and a controller for generating a damping force signal which causes the flow resistance generated by the variable damping valve to alter, the controller comprising a vehicle speed system control signal processing portion for outputting a damping force control signal based on a vehicle speed signal, and a steering system control signal processing portion which, when the outside disturbance to the handle bar reaches or exceeds a predetermined value, outputs a damping force control signal in accordance with the outside disturbance, wherein the flow resistance of the variable damping valve is controlled by the output of the vehicle speed system control signal processing portion of the controller when there is no output from the steering system control signal processing portion, and flow resistance in the variable damping valve is controlled by the output of the steering system control signal processing portion rather than the output of the vehicle speed system control signal processing portion when there is output from the steering system control signal processing portion.

The details as well as other features and advantages of the invention are set forth in the remainder of the specification and are shown in the accompanying drawings.

### BRIEF DESCRIPTION OF THE DRAWINGS

Fig. 1 is a hydraulic circuit diagram showing the constitution of this invention.
Fig. 2 is a block diagram of the control system thereof.
Fig. 3 is a hydraulic circuit diagram showing another constitution.
Fig. 4 is a constitutional diagram of a conventional steering damper.

### PREFERRED EMBODIMENTS

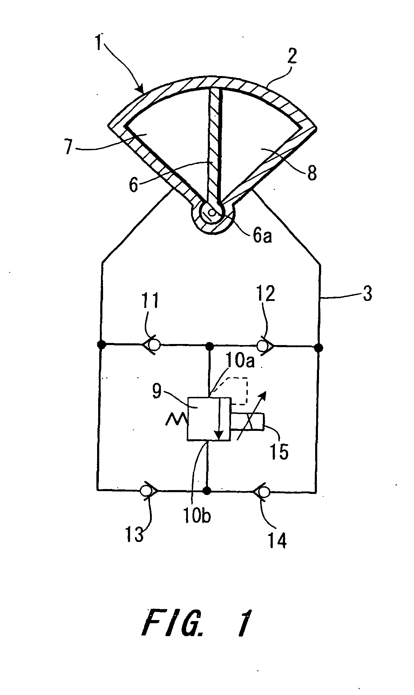

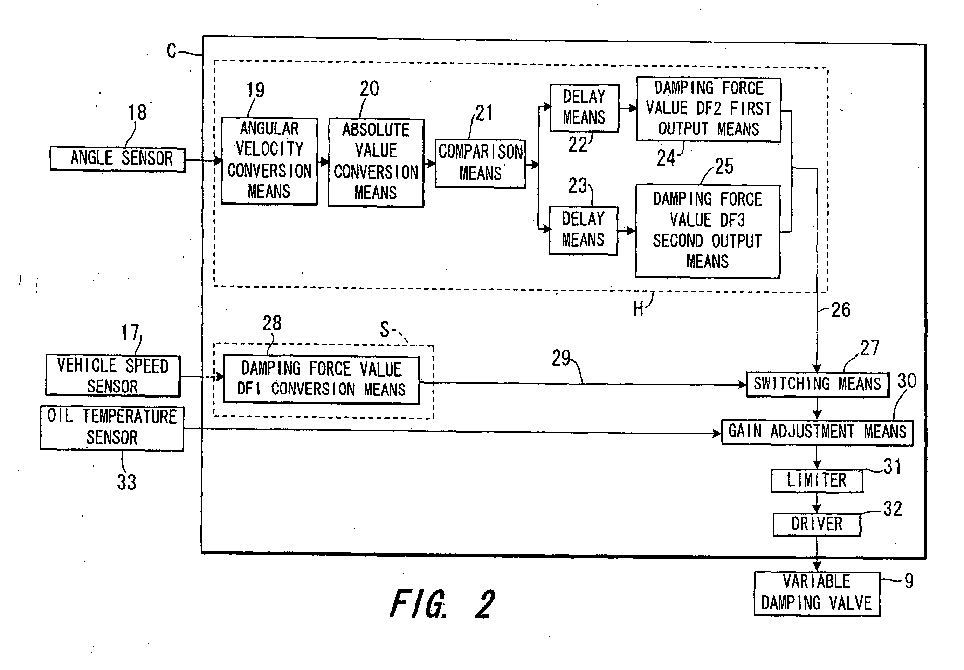

A first embodiment is illustrated in Figs. 1 and 2.

A partition member 6 rotatably supported by a shaft portion 6a is disposed inside housing 2 of a damper main body 1. The rotary distal end of the partition member 6 moves along the inner periphery of the housing 2 which is formed in an arc form. A pair of oil chambers 7, 8 are formed inside the housing 2 on either side of the partition member 6.

As is illustrated by the imaginary line, a handle bar 4 is connected to the shaft portion 6a of the partition member 6, and by operating the handle bar 4, the partition member 6 rotates integrally with the shaft portion 6a. The housing 2 is fixed to the vehicle body side, not shown in the drawing.

The aforementioned two oil chambers 7, 8 are filled with hydraulic fluid, and the two oil chambers 7, 8 are connected to each other by a hydraulic circuit 3. An electronically controlled variable damping valve 9 is interposed at a point on the hydraulic circuit 3.

The variable damping valve 9 comprises an inport 10a into which hydraulic fluid flows and an outport 10b from which hydraulic fluid flows, the inport 10a being connected to the two oil chambers 7, 8 via check valves 11, 12. These check valves 11, 12 are constituted so as to only allow flow-through from the oil chambers 7, 8 to the inport 10a side.

The outport 10b is connected to the two oil chambers 7, 8 via check valves 13, 14. These check valves 13, 14 are constituted so as to only allow flow-through from the outport 10b side to the oil chambers 7, 8.

The variable damping valve 9 is provided with a solenoid 15 for continuously altering the degree of opening of the valve. The solenoid 15 is constituted so as to reduce the degree of opening of the valve as the value of the current supplied to the solenoid 15 increases. Thereby, flow resistance in respect of the flow of hydraulic fluid increases, or in other words the damping force generated during flow-through of the hydraulic fluid increases.

When the handle bar 4 is turned, the partition member 6 rotates relatively within the housing 2 centered around the shaft portion 6a. As a result, the volume of one of the oil chambers contracts and the volume of the other oil chamber increases. At this time, the hydraulic fluid in the oil chamber with the contracted volume passes through the variable damping valve 9 to flow into the other oil chamber with the enlarged volume. Damping force is generated as a result of resistance produced when the hydraulic fluid flows into the variable damping valve 9, and this damping force becomes a value in accordance with the degree of opening of the valve which is set in the variable damping valve 9.

It should be noted that a throttle valve type variable damping valve 16, as shown in Fig. 3, may be used as the variable damping valve 9 instead of that shown in Fig. 1. In the case of this variable damping valve 16, the flow direction of the hydraulic fluid may be bidirectional rather than unidirectional such that the variable damping valve 16 is directly connected to the two oil chambers 7, 8.

The damping force generated by this variable damping valve 16 may be adjusted in accordance with the current value flowing into the solenoid 15 thereof, similarly to the aforementioned variable damping valve 9.

Next, a controller 50 for controlling the current value of the electronic variable damping valve 9 or 16 in accordance with the driving conditions will be described according to Fig. 2.

The controller 50 controls steering resistance force in respect of steering operations of the steering damper system, or in other words damping force, in accordance with the driving conditions.

In order to do so, signals are inputted into the controller 50 from a vehicle speed sensor 17 for detecting the vehicle speed and an angle sensor 18 which detects the steering angle of the handle bar in order to detect outside disturbances acting upon the handle bar 4. A signal is also inputted from an oil temperature sensor 33 which detects the temperature of the hydraulic fluid in order to compensate for fluctuation in the generated damping force caused by the temperature of the hydraulic fluid.

The controller 50 is constituted by a vehicle speed system control signal processing portion **S** and a steering system control signal processing portion **H,** the aforementioned vehicle speed sensor 17 being connected to the vehicle speed system control signal processing portion **S** and the angle sensor 18 being connected to the steering system control signal processing portion **H**.

The steering system control signal processing portion **H** generates differing damping force values **DF2** and **DF3** on the basis of the relationship to a steering operation amount, and comprises angular velocity conversion means 19, absolute value conversion means 20, comparison means 21, a pair of delay means 22, 23, first output means 24 for outputting the damping force value **DF2**, and second output means 25 for outputting the damping force value **DF3**.

The angular velocity conversion means 19 calculates the angular velocity from the steering angle of the handle bar 4. The absolute value conversion means 20 converts the angular velocity of the handle bar into an absolute value and output an according absolute signal to the comparison means 21.

The comparison means 21 stores a first threshold and a second threshold and makes comparisons to judge whether the aforementioned absolute value exceeds the first threshold or exceeds the second threshold. The first threshold is a value concerning whether or not the angular velocity of the handle bar determined from the steering angle of the handle bar is within a normal driving condition range.

Here, the angular velocity of the handle bar changes when outside disturbances or the like are introduced due to variation or the like in the road surface conditions when the vehicle is in motion. It should be noted, however, that although the angular velocity also changes during normal operation of the handle bar by the driver, the angular velocity at this time is extremely low and therefore at or below the first threshold.

If the angular velocity is within the range of the first threshold, it is judged that few outside disturbances have been introduced from the road surface during normal driving conditions.

Conversely, when the angular velocity exceeds the first threshold and enters the range of the second threshold, shaking in the handle bar is somewhat large, and it may be assumed that an external force has forcibly entered the handle bar side due to the vehicle riding over an obstacle on the road surface, for example. Moreover, when the angular velocity exceeds the second threshold, a case in which a considerably severe outside disturbance has entered the handle bar from the road surface, for example, is indicated.

When the comparison means 21 judges that the angular velocity has exceeded the first threshold but is at or below the second threshold, that is when the angular velocity is judged to be between the first threshold and second threshold, the according output signal causes one of the delay means 22 to switch on. The delay means 22 then causes the first output means 24 to operate such that the damping force value **DF2** is outputted to switching means 27 via an output line 26.

When the comparison means 21 judges that the angular velocity has exceeded the second threshold, the according output signal causes the other delay means 23 to switch on, and on this basis the delay means 23 causes the second output means 25 to operate such that the damping force value **DF3** is outputted to the switching means 27 via the output line 26.

In this case, the damping force value **DF2** outputted from the first output means 24 and the damping force value **DF3** outputted from the second output means 25 are set such that **DF2**<**DF3**.

It should be noted that when the comparison means 21 judges that the angular velocity is lower than the first threshold, neither of the delay means 22, 23 are switched on and neither of the damping force values **DF2, DF3** are outputted.

The vehicle speed system control signal processing portion **S** has as its main element conversion means 28. These conversion means 28 generates a damping force value **DF1** by converting a vehicle speed signal from the aforementioned vehicle speed sensor 17, and as a rule increase the damping force value **DF1** as the vehicle speed increases. In other words, the conversion means 28 adjusts the damping force such that if the vehicle speed is high, the operating force of the handle bar 4 is made heavier, and if the vehicle speed is low, the operating force of the handle bar is lightened. The conversion means 28 is connected to the switching means 27 via an output line 29.

Here, the damping force value **DF2** is set to be higher than the maximum value of the vehicle speed-sensitive damping force value **DF1.** In other words, a relationship of maximum damping force value **DF1<DF2<DF3** is maintained. Accordingly, the damping force generated by the variable damping valve is set to be larger at the damping force value **DF2** than at the damping force value **DF1**, and larger again at the damping force value **DF3** than at the damping force value **DF2.**

Normally, only the damping force value **DF1** is inputted into the switching means 27. In other words, when the angular velocity does not exceed the first threshold or the second threshold, the damping force value **DF1** is inputted but the damping force value **DF2** or **DF3** is not inputted.

Thus the switching means 27 normally outputs the damping force value **DF1** to the electromagnetic damping valve side. When the angular velocity exceeds the first threshold or second threshold, the damping force value **DF2** or **DF3** is also inputted into the switching means 27. When the damping force value **DF2** or **DF3** is inputted from the steering system control signal outputting portion **H**, the switching means 27 switches to the damping force value **DF2** or **DF3** such that same is outputted to the electromagnetic damping valve side. In other words, when the damping force value **DF2** or **DF3** is inputted, the switching means 27 cuts the damping force value **DF1** from the vehicle speed system control signal outputting portion **S** and switch to the damping force value **DF2** or **DF3** such that same is outputted.

Gain adjustment means 30 is provided on the output side of the switching means 27 for modifying gain in accordance with the oil temperature condition from the oil temperature sensor 33. As the oil temperature rises, this gain adjustment means 30 compensates therefor by increasing the gain such that the damping force value inputted from the switching means 27 increases. By modifying the gain in accordance with the oil temperature condition in this manner, optimum control which is uninfluenced by the oil temperature can be made possible.

The reference numeral 31 in the drawing indicates a limiter for limiting the output from the gain adjustment means 30 such that the damping force is not increased beyond a certain limit. The reference numeral 32 indicates a driver for amplifying the output signal transmitted through the limiter 31 and converting this signal into a driving signal for driving the variable damping valve.

The actions of this invention will now be described.

When the vehicle is in motion, and particularly when no disturbances occur, the angular velocity of the handle bar 4 remains within the range of the first threshold. When the angular velocity is thus within the range of the first threshold, no signals are outputted from the comparison means 21. Hence no output signals are outputted to the output line 26 from either the first output means 24 or the second output means 25. Since no output signal is outputted to the output line 26 from the steering system control signal outputting portion **H,** only the damping force value **DF1** from the vehicle speed system control signal processing portion S is outputted to the switching means 27. Thus the damping force value **DF1** is outputted to the switching means 27.

The outputted damping force value **DF1** is corrected to the correction value of the gain adjustment means 30 and outputted to the driver 32 as a damping force value **DF4.** A damping force value principally comprising the damping force value **DF1,** which is a signal from the vehicle speed system control signal processing portion **S,** is inputted into the driver 32, and thus the electronic variable damping valve 9 or 16 alters the set pressure of the damping force in accordance with the vehicle speed. In other words, as the vehicle speed rises the set pressure of the variable damping valve is increased such that the operating force of the handle bar 4 is made heavier.

Conversely, as the vehicle speed falls, the set pressure of the variable damping valve 9 or 16 is reduced such that the operating force of the handle bar 4 is lightened. Thus under normal driving conditions the operating force of the handle bar 4 is made dependent on the vehicle speed, as a result of which the steering feel can be favorably maintained.

Under such normal driving conditions, the operating force of the handle bar 4 is speed-sensitive, but when an outside disturbance is generated due to the vehicle riding over a large obstacle or the like and enters [the handle bar side] from the road surface such that the handle bar 4 must be moved, the angular velocity of the handle bar becomes faster than during normal driving conditions. Then, when the comparison means 21 judges that the angular velocity is higher than the first threshold and lower than the second threshold, one of the delay means 22 is switched on and the first output means 24 outputs the damping force value **DF2** to the switching means 27.

When the damping force value **DF2** is inputted into the switching means 27, the switching means 27 cuts the damping force value **DF1** of the vehicle speed system control signal processing portion **S** which is employed during normal driving conditions and outputs the damping force value **DF2.** When the damping force value **DF2** is outputted from the switching means 27, this damping force value **DF2** is corrected to the correction value of the gain adjustment means 30 and then outputted to the driver 32 as the damping force value **DF4**. As noted above, the damping force value **DF2** is greater than the maximum value of the damping force value **DF1.** Accordingly the damping force at this time is greater than under normal driving conditions. Since shaking in the handle bar 4 due to outside disturbances is suppressed as the damping force increases in this manner, maneuvering stability is maintained.

At times such as when the moving vehicle rides over an even larger obstacle than that noted above such that shaking in the handle bar becomes severe and the comparison means 21 judges that the angular velocity has increased beyond the second threshold, the other delay means 23 is switched on. It should be noted that at this time the first delay means 22 remains in an off state.

The damping force value **DF3** from the second output means 25 is then outputted by the comparison means 21 and transmitted to the switching means 27. When the damping force value **DF3** is inputted into the switching means 27, the switching means 27 outputs the damping force value **DF3**. Once the damping force value **DF3** is outputted from the switching means 27, the damping force value **DF3** is corrected to the correction value of the gain adjustment means 30 and then outputted to the driver 32 as the damping force value **DF3**.

This damping force value **DF3** is larger than the damping force value **DF2**, and hence the damping force at this time increases even further. Due to this further increase in damping force, shaking in the handle bar 4 is suppressed even when a larger obstacle is ridden over, and thus the operational safety of the handle bar 4 is preserved.

It should be noted that when the delay means 22, 23 are switched from an on state to an off state, a delay function operates. More specifically, as was described herein above, when the delay means 22, 23 are on, this signifies that the damping force value **DF2** or **DF3** from the steering system control signal processing portion **H** is under employment in the switching means 27. When the delay means 22, 23 switch from this state to an off state, this signifies that the angular velocity has fallen to or below a prescribed threshold and the damping force value in use is to be switched to the damping force value **DF1** from the vehicle speed system control signal processing portion **S.** When the damping force value **DF2** or **DF3** is switched to the damping force value **DF1** in this manner, the output signal from the vehicle speed system control signal processing portion **S** is not switched to immediately, but rather [the delay means 22, 23] are switched off after a short timing delay. More specifically, a time period during which the outside disturbance is predicted to be converged following the entrance of an outside disturbance which exceeds a threshold is set in advance, and the damping force value **DF2** or **DF3** is switched to the damping force value **DF1** following the elapse of this time period.

The reason for delaying the timing of switching from the damping force value from the steering system control signal outputting portion **H** to the damping force value of the vehicle speed system control signal outputting portion **S** using the delay means 22, 23 is in order to switch from the control characteristic of the steering system to the control characteristic of the vehicle speed system smoothly and with no sense of abruptness.

It should be noted that the aforementioned delay means may be provided on the output line 26. By thus providing the delay means on the output line 26, one delay means may be used to control both of the damping force values **DF2** and **DF3.** Further, the function of the delay means 22, 23 may be performed by the switching means 27. By thus providing the switching means 27 with the function of the delay means, specific delay means does not have to be provided.

Further, the damping force values **DF2** and **DF3** are set as fixed values but may be variable values. By making the damping force values variable values, the aforementioned plurality of damping force values need not be set, and accordingly one output means is sufficient. Also by making the damping force values variable values, switching from the damping force value of the steering system output signal processing portion **H** to the damping force value of the vehicle speed system control signal processing portion **S** may be performed with even less of a sense of abruptness. The reason for this is that when the output value is switched from the damping force value of the steering system to the damping force value of the vehicle speed system by the switching means 27, the damping force value of the steering system can be drawn gradually closer to the damping force value of the vehicle speed system. The damping force value of the vehicle speed system is switched to after the damping force value of the steering system has become a value which is close to the damping force value of the vehicle speed system. By thus switching to the damping force value of the vehicle speed system once the damping force values of the steering system and the vehicle speed system are close in value, the sense of abruptness during switching can be reduced even further.

It should be noted that in this embodiment, two thresholds are set, but three or more thresholds may be set. By setting a large number of thresholds in this manner, more detailed control of outside disturbances generated in the handle bar 4 can be performed.

As other embodiments, the use of the operating speed of the handle bar or the vertical acceleration (gravitational acceleration: **G**) of the handle bar as a steering system detection signal may be considered. More specifically, when the handle bar operating speed is used, an acceleration sensor for detecting acceleration about the handle bar axis (yaw) is connected to speed conversion means of the steering system control signal processing portion **H**. In this case, the acceleration sensor corresponds to the angle sensor 18 of the previous embodiment and the speed conversion means corresponds to the angular velocity conversion means 19. Apart from the acceleration sensor and the speed conversion means, this embodiment is identical to the previous embodiment.

The above-mentioned speed conversion means is used for converting the acceleration about the axis into the handle bar operating speed (by means of integration processing, for example) and transmitting this to the following absolute value conversion means 20. The absolute value conversion means 20 converts the handle bar operating speed into an absolute value and transmits the according absolute signal to the comparison means 21. The comparison means 21 is identical to the comparison means of the previous embodiment. That is, the comparison means 21 stores a first threshold and second threshold and makes comparisons to judge whether the aforementioned absolute value exceeds the first threshold or exceeds the second threshold. The first threshold is a value concerning whether or not the handle bar operating speed determined from the acceleration about the axis is within a normal driving condition range. Accordingly, if the absolute value is within the range of this first threshold, it is judged that driving conditions are normal.

If the absolute value exceeds the first threshold but remains at or within the second threshold, a situation in which a large obstacle has been ridden over, for example, is indicated, although this is milder than the outside disturbance condition when the second threshold is exceeded. When the second threshold is exceeded, the outside disturbance condition is indicated to be quite severe.

When the comparison means 21 judges that the first threshold has been exceeded, the damping force value **DF2** from the first output means 24 is outputted to the switching means 27. When the comparison means 21 judges that the second threshold has been exceeded, the damping force value **DF3** from the second output means 25 is outputted to the switching means 27. All other configurations are identical to the first embodiment.

When the vertical acceleration (gravitational acceleration) of the handle bar is used as a steering system detection signal, an acceleration sensor for detecting the vertical acceleration of the handle bar is connected to handle bar speed conversion means of the steering system control signal processing portion **H**. This acceleration sensor corresponds to the angle sensor 18 of the first embodiment, and the handle bar speed conversion means corresponds to the angular velocity conversion means 19 of the first embodiment. Apart from the acceleration sensor and the handle bar speed conversion means, this embodiment is identical to the first embodiment.

The handle bar speed conversion means is used for converting the vertical acceleration of the handle bar into the vertical speed of the handle bar and transmitting this to the following absolute value conversion means 20. The absolute value conversion means 20 converts the handle bar vertical speed into an absolute value and transmits the according absolute signal to the comparison means 21. The comparison means 21 is identical to the comparison means of the first and second embodiments. That is, the comparison means 21 stores a first threshold and second threshold and makes comparisons to judge whether the aforementioned absolute value exceeds the first threshold or exceeds the second threshold. The first threshold is a value concerning whether or not the handle bar vertical speed determined from the vertical acceleration is within the normal driving condition range. Accordingly, if the absolute value is within the range of this first threshold, it is judged that driving conditions are normal.

If the absolute value exceeds the first threshold but remains at or within the second threshold, a situation in which a large obstacle has been ridden over, for example, is indicated, although this is milder than the outside disturbance condition when the second threshold is exceeded. When the second threshold is exceeded, the outside disturbance condition is indicated to be quite severe. The circuits downstream of the comparison means 21 are identical to the first embodiment.

As described above, when the steering system detection signal for detecting outside disturbances to the steering exceeds a threshold, flow resistance in the variable damping valve is controlled on the basis of an output signal from the steering system control signal processing portion, and when this steering system detection signal is at or below a threshold, flow resistance in the variable damping valve is controlled on the basis of an output signal from the vehicle speed system control signal processing portion, and thus when outside disturbances are generated the damping force can be increased, and when no outside disturbances are generated the damping force can be decreased. As a result, during normal driving conditions when no outside disturbances are generated, agile maneuverability can be favorably preserved, and when outside disturbances are generated, operational safety can be sufficiently maintained.

Further, delay means is provided for delaying the output timing of the output signal which is outputted from the steering system control signal processing portion, and thus when switching from the output of the steering system control signal processing portion to the vehicle speed system control signal processing portion, this switching can be performed smoothly with no sense of abruptness. Gain adjustment means is also provided for modifying gain in accordance with the oil temperature, flow resistance in the variable damping valve being corrected on the basis of the gain adjustment means, and thus a stabilized damping force can be maintained at all times regardless of the oil temperature.

This invention is not limited to the aforementioned embodiments and is clearly understood to include various modifications and improvements within the scope of the claims which may be implemented by a person skilled in the art.

## Claims

1. A steering damper system for applying steering resistance by means of oil pressure, comprising:
means for detecting vehicle speed;
**characterized by**
a variable damping valve, interposed on a channel through which hydraulic fluid flows in accordance with a steering operation, which generates flow resistance and variably alters said flow resistance in accordance with a control signal;
means for detecting outside disturbances which enter a handle bar side; and
a controller (C,50) for generating a damping force signal which causes the flow resistance generated by the variable damping valve to alter, the controller comprising a vehicle speed system control signal processing portion (S) for outputting a damping force control signal (DF1) based on a vehicle speed signal, and a steering system control signal processing portion (H) which, when the outside disturbance to the handle bar reaches or exceeds a predetermined value, outputs a damping force control signal (DF2, DF3) in accordance with the outside disturbance,
wherein the flow resistance of the variable damping valve is controlled by the output (DF1) of the vehicle speed system control signal processing portion (S) of the controller when there is no output from the steering system control signal processing portion (H), and flow resistance in the variable damping valve is controlled by the output (DF2, DF3) of the steering system control signal processing portion (H) rather than the output of the vehicle speed system control signal processing portion (S) when there is output from the steering system control signal processing portion.

2. The steering damper system as defined in claim 1, wherein the damping force control signal (DF2, DF3) from the steering system is set so as to increase the flow resistance generated by the variable damping valve further than the damping force control signal (DF1) from the vehicle speed system.

3. The steering damper system as defined in claim 2, wherein the damping force control signal (DF2,DF3) from the steering system is set so as to apply flow resistance of at least two differing magnitudes to the variable damping valve.

4. The steering damper system as defined in claim 1, wherein the steering system control signal processing portion (S) includes delay means for delaying the output timing of the control signal outputted in accordance with outside disturbances.

5. The steering damper system as defined in claim 1, wherein the means for detecting outside disturbances to the steering system is a sensor (18) which detects the steering angle of the handle bar.

6. The steering damper system as defined in claim 1, wherein the means for detecting outside disturbances to the steering system is a sensor which detects the vertical acceleration (G) of the handle bar.

7. The steering damper system as defined in claim 1, wherein the means for detecting outside disturbances to the steering system is a sensor which detects the acceleration about the axis of the handle bar.

8. The steering damper system as defined in claim 1, further comprising:
oil temperature detection means (33) for detecting the temperature of the hydraulic fluid; and
gain adjustment means (30) for correcting the control signal outputted from the controller in accordance with the detected oil temperature.

## Patentansprüche

1. Lenkungsdämpfersystem für die Aufbringung eines Lenkwiderstands mittels Öldruck, umfassend :
Mittel für das Detektieren der Fahrzeuggeschwindigkeit,
**gekennzeichnet durch**
ein variables Dämpfungsventil, das an einem Kanal angeordnet ist, **durch** den Hydraulikflüssigkeit entsprechend einem Lenkvorgang fließt, das Strömungswiderstand erzeugt und entsprechend einem Steuersignal den genannten Strömungswiderstand in variabler Form ändert;
Mittel zum Detektieren von von außen einwirkenden Störungen, die auf einer Lenkstangenseite eintreten; und
ein Steuergerät (C, 50) für das Erzeugen eines Dämpfungskraftsignals, welches eine Änderung des **durch** das variable Dämpfungsventil erzeugten Strömungswiderstandes bewirkt, wobei das Steuergerät einen Bereich (S) für die Verarbeitung eines Steuersignals des Fahrzeuggeschwindigkeitssystems zur Abgabe eines auf einem Fahrzeuggeschwindigkeitssignal basierenden Dämpfungskraftsteuersignals (DF1) und einen Bereich (H) für die Bearbeitung eines Lenksystemsteuersignals umfasst, der ein Dämpfungskraftsteuersignal (DF2, DF3) entsprechend der von außen einwirkenden Störung abgibt, wenn die von außen einwirkende Störung an der Lenkstange einen vorbestimmten Wert erreicht oder überschreitet,
wobei der Strömungswiderstand des variablen Dämpfungsventils **durch** den Ausgabe (DF1) des Bereiches (S) für die Verarbeitung eines Steuersignals des Fahrzeuggeschwindigkeitssystems des Steuergerätes gesteuert wird, wenn keine Ausgabe aus dem Bereich (H) für die Verarbeitung eines Lenksystemsteuersignals erfolgt, und der Strömungswiderstand im variablen Dämpfungsventil **durch** die Ausgabe (DF2, DF3) des Bereiches (H) für die Verarbeitung eines Lenksystemsteuersignals anstelle der Ausgabe des Bereiches (S) für die Verarbeitung eines Steuersignals des Fahrzeuggeschwindigkeitssystems gesteuert wird, wenn eine Ausgabe aus dem Bereich für die Verarbeitung eines Lenksystemsteuersignals erfolgt.

2. Lenkungsdämpfersystem nach Anspruch 1, **dadurch gekennzeichnet, dass** das Dämpfungskraftsteuersignal (DF2, DF3) aus dem Lenksystem so eingestellt wird, dass der von dem variablen Dämpfungsventil erzeugte Strömungswiderstand über das Dämpfungskraftsteuersignal (DF1) aus dem Fahrzeuggeschwindigkeitssystem hinaus erhöht wird.

3. Lenkungsdämpfersystem nach Anspruch 2, **dadurch gekennzeichnet, dass** das Dämpfungskraftsteuersignal (DF2, DF3) aus dem Lenksystem so eingestellt wird, dass Strömungswiderstand von mindestens zwei unterschiedlichen Größenordnungen an das variable Dämpfungsventil angelegt wird.

4. Lenkungsdämpfersystem nach Anspruch 1, **dadurch gekennzeichnet, dass** der Bereich (S) für die Verarbeitung eines Steuersignals des Fahrzeuggeschwindigkeitssystems Verzögerungsmittel für das Verzögern des Ausgabezeitpunktes des entsprechend der von außen einwirkenden Störungen abgegebenen Steuersignals aufweist.

5. Lenkungsdämpfersystem nach Anspruch 1, **dadurch gekennzeichnet, dass** das Mittel für das Detektieren von von außen einwirkenden Störungen am Lenksystem ein Sensor (18) ist, der den Lenkwinkel der Lenkstange detektiert.

6. Lenkungsdämpfersystem nach Anspruch 1, **dadurch gekennzeichnet, dass** das Mittel für das Detektieren von von außen einwirkenden Störungen am Lenksystem ein Sensor ist, der die vertikale Beschleunigung (G) der Lenkstange detektiert.

7. Lenkungsdämpfersystem nach Anspruch 1, **dadurch gekennzeichnet, dass** das Mittel für das Detektieren von von außen einwirkenden Störungen am Lenksystem ein Sensor ist, der die Beschleunigung um die Achse der Lenkstange detektiert.

8. Lenkungsdämpfersystem nach Anspruch 1, **dadurch gekennzeichnet, dass** es des weiteren umfasst:
Öltemperaturdetektierungsmittel (33) für das Detektieren der Temperatur der Hydraulikflüssigkeit und
Verstärkungsanpassungsmittel (30) für das Korrigieren des vom Steuergerät entsprechend der detektierten Öltemperatur abgegebenen Signals.

## Revendications

1. Système d'amortisseur de direction pour appliquer une résistance de direction au moyen d'une pression d'huile comportant : un moyen pour détecter la vitesse du véhicule, **caractérisé par**
une soupape d'amortissement variable, intercalée dans un canal à travers lequel le fluide hydraulique s'écoule conformément à une manoeuvre de direction qui génère une résistance au flux et modifie de manière variable ladite résistance au flux conformément à un signal de commande;
un moyen pour détecter des perturbations extérieures qui entrent d'un côté du guidon; et un appareil de commande (C, 50) pour générer un signal de force d'amortissement qui cause le changement de la résistance au flux généré par la soupape d'amortissement variable, l'appareil de commande comportant une partie de traitement (S) du signal de commande du système de vitesse du véhicule pour émettre un signal de commande (DF1) de la force d'amortissement basé sur un signal de vitesse du véhicule, et une partie de traitement (H) du signal de commande du système de direction, qui lorsque la perturbation extérieure agissant sur le guidon atteint ou dépasse une valeur prédéterminée émet un signal de commande (DF2, DF3) de la force d'amortissement conformément à la perturbation extérieure,
dans lequel la résistance au flux de la soupape d'amortissement variable est commandée par la sortie (DF1) de la partie de traitement (S) du signal de commande du système de vitesse du véhicule de l'appareil de commande lorsqu'il n'y a pas de sortie à partir de la partie de traitement (H) du signal de commande du système de direction, et la résistance au flux dans la soupape d'amortissement variable est commandée par la sortie (DF2, DF3) de la partie de traitement (H) du signal de commande du système de direction plutôt que par la sortie de la partie de traitement (S) du signal de commande du système de vitesse du véhicule lorsqu'il y'a une sortie à partir de la partie de traitement du signal de commande du système de direction.

2. Système d'amortisseur de direction selon la revendication 1, dans lequel le signal de commande (DF2, DF3) de la force d'amortissement à partir du système de direction est réglé de manière à augmenter la résistance au flux générée par la soupape d'amortissement variable au-delà du signal de commande (DF1) de la force d'amortissement à partir du système de vitesse du véhicule.

3. Système d'amortisseur de direction selon la revendication 2, dans lequel le signal de commande (DF2, DF3) de la force d'amortissement à partir du système de direction est réglé de manière à appliquer une résistance au flux d'au moins deux grandeurs différentes à la soupape d'amortissement variable.

4. Système d'amortisseur de direction selon la revendication 1, dans lequel la partie de traitement (S) du signal de commande du système de direction inclut des moyens de retardement pour retarder le moment de sortie du signal de commande émis conformément à des perturbations extérieures.

5. Système d'amortisseur de direction selon la revendication 1, dans lequel le moyen pour détecter des perturbations extérieures au système de direction est un capteur (18) qui détecte l'angle de direction de guidon.

6. Système d'amortisseur de direction selon la revendication 1, dans lequel le moyen pour détecter des perturbations extérieures au système de direction est un capteur qui détecte l'accélération verticale (G) du guidon.

7. Système d'amortisseur de direction selon la revendication 1, dans lequel le moyen pour détecter des perturbations extérieures au système de direction est un capteur qui détecte l'accélération autour de l'axe du guidon.

8. Système d'amortisseur de direction selon la revendication 1, comportant par ailleurs :
un moyen de détection (33) de la température de l'huile pour détecter la température du fluide hydraulique; et
un moyen d'adaptation (30) du gain pour corriger le signal de commande émis par l'appareil de commande conformément à la température de l'huile détectée.
